(19) **Europäisches Patentamt**
**European Patent Office**
**Office européen des brevets**

(11) **EP 2 894 561 A1**

(12) **EUROPEAN PATENT APPLICATION**
published in accordance with Art. 153(4) EPC

(43) Date of publication:
**15.07.2015 Bulletin 2015/29**

(21) Application number: **14789502.3**

(22) Date of filing: **25.04.2014**

(51) Int Cl.:
***G06F 9/44*** *(2006.01)*

(86) International application number:
**PCT/CN2014/076174**

(87) International publication number:
**WO 2015/078139 (04.06.2015 Gazette 2015/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.11.2013 CN 201310632199**

(71) Applicant: **Huawei Technologies Co., Ltd.**
**Longgang District**
**Shenzhen, Guangdong 518129 (CN)**

(72) Inventors:
• **CENG, Jianjiang**
**Shenzhen**
**Guangdong 518129 (CN)**

• **ZHUO, Yuzhang**
**Shenzhen**
**Guangdong 518129 (CN)**
• **HU, Hailiang**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **TRANSPLANTING METHOD AND SOURCE-TO-SOURCE COMPILER**

(57) Embodiments of the present invention disclose a transplantation method and a source-to-source compiler, which are used to solve a problem that cross-platform transplantation of an application cannot be implemented in the prior art. The method includes: receiving common platform algorithm source code that is unrelated to a platform chip architecture, is written for an application program, and uses a general operator and a general data type; performing conversion on the general operator and the general data type in the common platform algorithm source code to obtain target platform algorithm source code that meets a target platform operation requirement; and sending the target platform algorithm source code to a target platform compiler. In the embodiments, the common platform algorithm source code is used as intermediate code; the general operator and the general data type of the common platform algorithm source code are converted to obtain the target platform algorithm source code that meets the target platform operation requirement; and conversion of the general operator and the general data type is conversion of a basic operation. Therefore, cross-platform source-to-source conversion can be implemented, and the problem that cross-platform source-to-source conversion cannot be implemented in the prior art is solved.

FIG. 4

**Description**

**TECHNICAL FIELD**

This application claims priority to Chinese Patent Application No. 201310632199.5, filed with the Chinese Patent Office on November 29, 2013, and entitled "TRANSPLANTATION METHOD AND SOURCE-TO-SOURCE COMPILER", which is incorporated herein by reference in its entirety.

**BACKGROUND**

When a DSP (Digital Signal Processing) platform, a CPU, and a GPU (Graphic Processing Unit) are upgraded and updated (the DSP platform, the CPU, and the GPU are collectively referred to as platforms), an application in an original platform often needs to undergo corresponding transplantation, so that the application can be applied in an upgraded and updated platform (which may be referred to as a target platform). The original platform and the target platform may be different platforms, that is, program transplantation has a requirement for cross-platform transplantation. The different platforms refer to platforms with different chip architectures (for example, an instruction and a data type definition).

The application is a binary executable file (exe file) that is obtained after program source code is compiled. For optimal performance, algorithm program source code in the application is strongly associated with a platform chip architecture generally. Therefore, a core of transplantation of the application is to convert algorithm source code applicable to an original platform to algorithm source code applicable to a target platform, that is, to perform source-to-source conversion.

An existing source-to-source compiler can implement conversion from single-threaded code to multi-threaded code, and conversion between source code of different languages. However, source-to-source conversion performed by the existing source-to-source compiler is conversion of service logic, and does not involve conversion of a basic operation related to a platform. Therefore, the existing source-to-source compiler is only applicable to conversion of a same platform, and cannot implement a cross-platform application, that is, the existing source-to-source compiler cannot implement cross-platform source-to-source conversion, and further cannot implement cross-platform transplantation of an application program.

**SUMMARY**

In view of this, an objective of embodiments of the present invention is to provide a transplantation method and a source-to-source compiler, which are used to solve a problem that cross-platform transplantation of an application cannot be implemented in the prior art.

To achieve the foregoing objective, the embodiments of the present invention provide the following technical solutions:

According to a first aspect of an embodiment of the present invention, a cross-platform transplantation method for an application is provided, including:

receiving common platform algorithm source code that is unrelated to a platform chip architecture, is written for an application program, and uses a general operator and a general data type;

performing conversion on the general operator and the general data type in the common platform algorithm source code to obtain target platform algorithm source code that meets a target platform operation requirement and a data type requirement; and

sending the target platform algorithm source code to a target platform compiler, so that the target platform compiler performs compiling on the target platform algorithm source code to obtain an application that can run on a target platform.

With reference to the first aspect, in a first possible implementation manner, the performing conversion on the general operator and the general data type in the common platform algorithm source code to obtain target platform algorithm source code that meets a target platform operation requirement and a data type requirement specifically includes:

parsing the common platform algorithm source code to obtain an abstract syntax tree, where the abstract syntax tree includes a general operation node;

performing replacement processing and optimization processing on the general operation node in the abstract syntax tree to obtain a syntax tree that meets the target platform operation requirement and the data type requirement; and

deparsing the syntax tree that meets the target platform operation requirement and the data type requirement, so as to obtain the target platform algorithm source code.

With reference to the first possible implementation manner of the first aspect, in a second possible implementation manner, the parsing the common platform algorithm source code to obtain an abstract syntax tree includes:

performing lexical analysis on the common platform algorithm source code to obtain a token stream;

performing syntactic analysis on the token stream to form a first syntax tree; and

performing semantic analysis on the first syntax tree to obtain an abstract syntax tree that has undergone semantic analysis processing.

With reference to the first or the second possible implementation manner of the first aspect, in a third possible implementation manner, the replacement processing includes:

enabling each general operation node in the abstract syntax tree to match a general operation library template, where when a preset matching condition is satisfied, the matching is successful; and

using content in a successfully matched general operation library template to replace content of a general operation node that matches the general operation library template, so as to obtain a second syntax tree; and

the optimization processing includes: performing at least one of merging nodes with a same circle, eliminating redundant nodes, and vectorization on the second syntax tree, so as to obtain the syntax tree that meets the target platform operation requirement and the data type requirement.

With reference to any one possible implementation manner of the first to the third possible implementation manners of the first aspect, in a fourth possible implementation manner, the general operation node includes a general operator node and an operand node; the general operation library template includes a general operation template and a general data type template; and content of the general operation template includes operation code that is applicable to the target platform and can implement a general operation; and content of the general data type template includes a definition or an explanation of a data type that is applicable to the target platform and corresponds to a general data type.

With reference to the fourth possible implementation manner of the first aspect, in a fifth possible implementation manner, when the general operator node is enabled to match the general operation template, the preset matching condition includes that: a general operator included in the general operator node is consistent with a general operation that is implemented by the general operation template, and a dependency relationship exists between associated nodes of the general operator node;

when the operand node is enabled to match the general data type template, the preset matching condition includes that: a general data type included in the operand node is consistent with a general data type corresponding to the general data type template, and a dependency relationship exists between associated nodes of the operand node; and

the associated nodes include at least one of: a left node and a right node.

With reference to the fourth possible implementation manner of the first aspect, in a sixth possible implementation manner, the general operation library template further includes a dedicated instruction template, where content of the dedicated instruction template includes an instruction that is applicable to the target platform and can implement a general operation;

when the general operator node is enabled to match the dedicated instruction template, the preset matching condition includes that: a general operator included in the general operator node is consistent with a general operation that is implemented by the dedicated instruction template, and a dependency relationship exists between associated nodes of the general operator node; and

the associated nodes include at least one of: a left node and a right node.

With reference to any one of the first aspect to the sixth possible implementation manner of the first aspect, in a seventh possible implementation manner, the received algorithm source code is specifically general DSP algorithm C source code.

According to a second aspect of an embodiment of the present invention, a source-to-source compiler is provided, including:

a receiving unit, configured to receive common platform algorithm source code that is unrelated to a platform chip architecture, is written for an application, and uses a general operator and a general data type;

a converting unit, configured to perform conversion on the general operator and the general data type in the common platform algorithm source code to obtain target platform algorithm source code that meets a target platform operation requirement and a data type requirement; and

a sending unit, configured to send the target platform algorithm source code to a target platform compiler, so that the target platform compiler performs compiling on the target platform algorithm source code to obtain an application that can run on a target platform.

With reference to the second aspect, in a first possible implementation manner of the second aspect, in an aspect of the performing conversion on the general operator and the general data type in the common platform algorithm source code to obtain target platform algorithm source code that meets a target platform operation requirement and a data type requirement, the converting unit is specifically configured to:

parse the common platform algorithm source code to obtain an abstract syntax tree, where the abstract syntax tree includes a general operation node;

perform replacement processing and optimization processing on the general operation node in the abstract syntax tree to obtain a syntax tree that meets the target platform operation requirement and the data type requirement; and

deparse the syntax tree that meets the target platform operation requirement and the data type requirement, so as to obtain the target platform algorithm source code.

With reference to the first possible implementation manner of the second aspect, in a second possible implementation manner, in an aspect of the parsing the common platform algorithm source code to obtain an abstract syntax tree, the converting unit is specifically configured to:

perform lexical analysis on the common platform algorithm source code to obtain a token stream;
perform syntactic analysis on the token stream to form a first syntax tree; and
perform semantic analysis on the first syntax tree to obtain an abstract syntax tree that has undergone semantic analysis processing.

With reference to the first possible implementation manner of the second aspect, or the second possible implementation manner of the second aspect, in a third possible implementation manner, in an aspect of the replacement processing, the converting unit is specifically configured to:

enable each general operation node in the abstract syntax tree to match a general operation library template, where when a preset matching condition is satisfied, the matching is successful; and
use content in a successfully matched general operation library template to replace content of a general operation node that matches the general operation library template, so as to obtain a second syntax tree; and
in an aspect of the optimization processing, the converting unit is specifically configured to: perform at least one of merging nodes with a same circle, eliminating redundant nodes, and vectorization on the second syntax tree, so as to obtain the syntax tree that meets the target platform operation requirement and the data type requirement.

With reference to the first possible implementation manner of the second aspect, or the second possible implementation manner of the second aspect, in a third possible implementation manner, the general operation node includes a general operator node and an operand node; the general operation library template includes a general operation template and a general data type template; content of the general operation template includes operation code that is applicable to the target platform and can implement a general operation; and content of the general data type template includes a definition or an explanation of a data type that is applicable to the target platform and corresponds to a general data type.

With reference to the third possible implementation manner of the second aspect, in a fourth possible implementation manner, when the general operator node is enabled to match the general operation template, the preset matching condition includes that: a general operator included in the general operator node is consistent with a general operation that is implemented by the general operation template, and a dependency relationship exists between associated nodes of the general operator node; when the operand node is enabled to match the general data type template, the preset matching condition includes that: a general data type included in the operand node is consistent with a general data type corresponding to the general data type template, and a dependency relationship exists between associated nodes of the operand node; and the associated nodes include at least one of: a left node and a right node.

With reference to the third possible implementation manner of the second aspect, in a fifth possible implementation manner, the general operation library template further includes a dedicated instruction template, where content of the dedicated instruction template includes an instruction that is applicable to the target platform and can implement a general operation; when the general operator node is enabled to match the dedicated instruction template, the preset matching condition includes that: a general operator included in the general operator node is consistent with a general operation that is implemented by the dedicated instruction template, and a dependency relationship exists between associated nodes of the general operator node; and the associated nodes include at least one of: a left node and a right node.

It can be seen that, in the embodiments of the present invention, common platform algorithm source code that uses a general operator and a general data type is used as intermediate code; the general operator and the general data type of the common platform algorithm source code are converted to obtain target platform algorithm source code that meets a target platform operation requirement and a data type requirement; and conversion of the general operator and the general data type is conversion of a basic operation. Therefore, in the embodiments of the present invention cross-platform source-to-source conversion can be implemented, and a problem that cross-platform source-to-source conversion cannot be implemented in the prior art is solved. After the obtained target platform algorithm source code is sent to a target platform compiler, the target platform compiler can perform compiling on the target platform algorithm source code to finally obtain an application that can run on a target platform, so as to transplant an application in an original platform to the target platform.

BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of cross-platform transplantation according to an embodiment of the present invention;

FIG. 2 is another schematic diagram of cross-platform transplantation according to an embodiment of the present invention;

FIG. 3 is a schematic structural diagram of a general-purpose computer according to an embodiment of the present invention;

FIG. 4 is a flowchart of a transplantation method according to an embodiment of the present invention;

FIG. 5 is another flowchart of a transplantation method according to an embodiment of the present invention;

FIG. 6 is still another flowchart of a transplantation method according to an embodiment of the present invention;

FIG. 7 is yet another flowchart of a transplantation method according to an embodiment of the present invention;

FIG. 8 is a schematic diagram of a syntax tree according to an embodiment of the present invention;

FIG. 9 is another schematic diagram of a syntax tree according to an embodiment of the present invention;

FIG. 10 is still another schematic diagram of a syntax tree according to an embodiment of the present invention;

FIG. 11 is yet another schematic diagram of a syntax tree according to an embodiment of the present invention;

FIG. 12 is a schematic diagram of a data type template of a matrix container according to an embodiment of the present invention;

FIG. 13 is a schematic diagram of a dedicated instruction template according to an embodiment of the present invention;

FIG. 14 is yet another flowchart of a transplantation method according to an embodiment of the present invention;

FIG. 15 is a schematic diagram of general DSP algorithm C source code corresponding to a vector modulo operation according to an embodiment of the present invention;

FIG. 16 is yet another schematic diagram of a syntax tree according to an embodiment of the present invention;

FIG. 17 is another schematic diagram of a dedicated instruction template according to an embodiment of the present invention;

FIG. 18 is a schematic diagram of target platform algorithm source code according to an embodiment of the present invention;

FIG. 19 is a schematic diagram of converting general convolution algorithm code to algorithm code used in a TI platform according to an embodiment of the present invention;

FIG. 20 is a schematic diagram of algorithm source code that corresponds to general convolution algorithm code and is used in a Tensilica platform according to an embodiment of the present invention;

FIG. 21 is a schematic structural diagram of a source-to-source compiler according to an embodiment of the present invention; and

FIG. 22 is another schematic structural diagram of a source-to-source compiler according to an embodiment of the present invention.

## DESCRIPTION OF EMBODIMENTS

For reference and clarity, technical terms, short forms, or abbreviations used below are summarized and explained as follows:

AST: abstract syntax tree, abstract syntax tree. The AST is a tree representation form of an abstract syntax structure of source code, and especially refers to source code of a programming language herein. Each node (syntax unit) in a tree indicates a structure of source code. A reason why syntax is "abstract" is that the syntax herein does not indicate every detail that exists in real syntax. For example, a nested bracket is implicit in a structure of an AST, and is not presented in a form of a node; however, such a conditional jump statement similar to if-condition-then may be indicated by using a node with two branches. Once the AST is created, in a subsequent processing process, such as a semantic analysis phase, some information may be added. The AST is an intermediate representation form in a program compilation phase, includes all static information that is required for showing a source program result, and has relatively high storage efficiency. In addition, program optimization may be performed based on the AST to generate machine code and generate a data flow and a control flow, which is widely applied in the field of program analysis.

Fixed-point number: the fixed-point number refers to that a position of a decimal point in a number is fixed, generally including a fixed-point integer and a fixed-point decimal. After the position of the decimal point is selected, all numbers in an operation shall be unified as fixed-point integers or fixed-point decimals, and a decimal problem is not further considered in the operation. The fixed-point number is limited by a word length, and may overflow if exceeding a range.

Floating-point number: a position of a decimal point in a floating-point number is not fixed, and is indicated by an exponent and a mantissa. Generally, the mantissa is a pure decimal, the exponent is an integer, and the exponent and the mantissa are both signed numbers. A sign of the mantissa indicates positivity and negativity of a number, and a sign of the exponent indicates an actual position of a decimal point.

ISA: Instruction Set Architecture. The ISA is a part of a computer architecture related to program design, and includes a local data type, an instruction, a register, an address mode, a memory architecture, interrupt and exceptional handling, and external I/O.

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the prior art, there are two manners in which cross-platform transplantation (reuse) can be implemented.

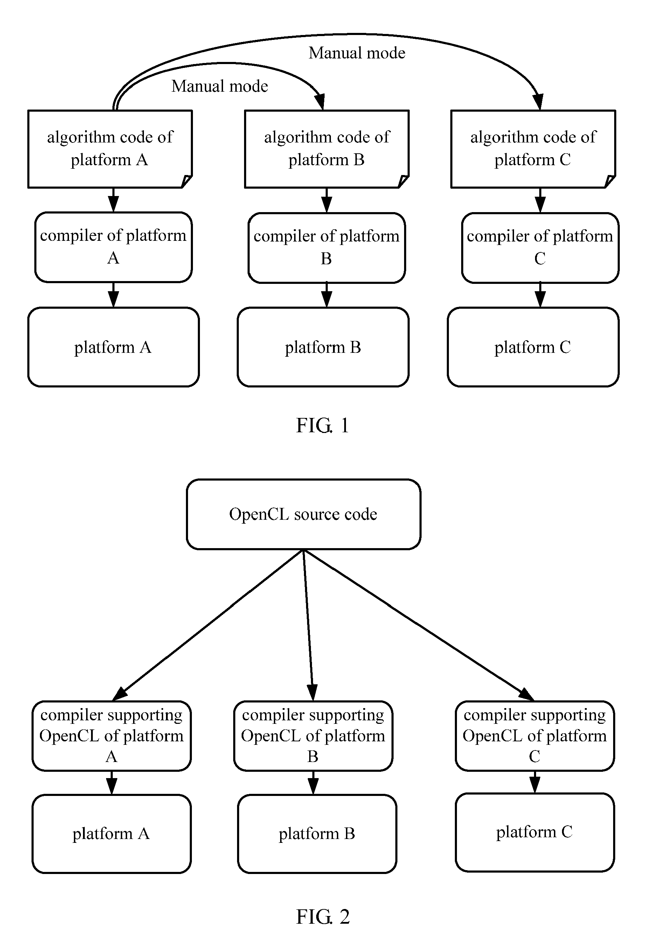

One manner is that: referring to FIG. 1, according to a target platform (platform B and platform C) instruction and an architectural feature, cross-DSP platform reuse of algorithm source code of a platform A is completed by manual modification, and a disadvantage of this manner is that every time a platform is updated, assembly code of algorithm code needs to be modified, the algorithm source code of the original platform A cannot be reused, efficiency is relatively low, and research and development costs are increased. In addition, research and development personnel need to be familiar with platform instructions and chip architectures of an original platform and a target platform, which causes high dependence on technologies of the research and development personnel. If there are multiple target platforms, and chip architectures are different, the research and development personnel need to manually modify each target platform, and it is quite difficult for platform transplantation.

The other manner is that: referring to FIG. 2, in a programming tool technology (for example, OpenCL) based on an API interface, source code is compiled into executable programs on different platforms by using compilers (which need to support an OpenCL feature) on different platforms. A disadvantage of this manner is that a compiler on each target platform needs to be modified, and the platform upgrading efficiency for is low.

In addition, there is another manner of source-to-source conversion to implement transplantation of a same platform. After this manner is used for conversion of algorithm source code, conversion from single-threaded code to multi-threaded code and conversion between source code of different languages may be implemented. A disadvantage of this manner is that: this manner only involves conversion of service logic, and does not involve conversion of a basic operation related to a platform. Therefore, this manner is only applicable to conversion of a same platform, and cannot be applicable to a cross-platform application, that is, this manner cannot implement cross-platform source-to-source conversion, and further cannot implement cross-platform transplantation of an application program.

As seen from the foregoing multiple conventional technologies, manual modification is needed, or dependence on technologies of the research and development personnel is high, or a compiler of a target platform needs to be modified, or cross-platform application cannot be implemented.

In view of this, an embodiment of the present invention provides a cross-platform transplantation method for an application program, which is used to transplant the application in an original platform to a target platform, so as to solve the foregoing problem.

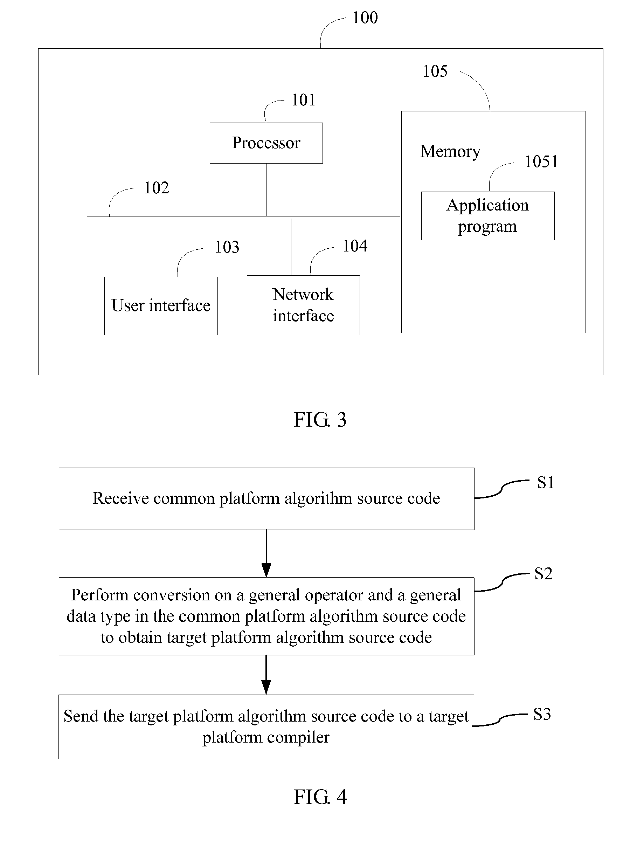

An execution body of this method is a source-to-source compiler. A source-to-source compiler 100 is used as an execution body of the transplantation method, a structure of a general-purpose computer of the source-to-source compiler 100, as shown in FIG. 3, includes at least one processor 101, for example, a CPU, at least one network interface 104 or another user interface 103, a memory 105, and at least one communications bus 102. The communications bus 102 is configured to implement connection and communication between these components. The transmission timing device 100 optionally includes a keyboard or a clicking device, for example, a mouse and a trackball (trackball). In the embodiment of the present invention, the processor 101 performs steps in the transplantation method by invoking an application 1051 or an instruction stored in the memory 105.

Referring to FIG. 4, the transplantation method at least includes the following steps:

S1. Receive common platform algorithm source code that is unrelated to a platform chip architecture, is written for an application program, and uses a general operator and a general data type.

In actual use, algorithm source code that corresponds to the application and is applicable to an original platform is manually or automatically converted to the common platform algorithm source code. Certainly, when algorithm source code of an original platform is being written, the algorithm source code may also be written into the common platform algorithm source code directly.

The common platform algorithm source code conforms to a general syntax rule, where the "general syntax rule" refers to a syntax rule unrelated to a platform chip architecture, and the common platform algorithm source code includes a data type that conforms to the general syntax rule (which may be referred to as a general data type or a general data type unrelated to a platform chip architecture), and an operator that conforms to the general syntax rule (which may be referred to as a general operator or a general operator unrelated to a platform chip architecture).

In this embodiment, a syntax definition of the common platform algorithm source code may be implemented by performing syntax extension based on C language, that is, syntax of the common platform algorithm source code = C language syntax + extended syntax. In addition, the syntax definition of the common platform algorithm source code may also be implemented by performing syntax extension based on C++, JAVA and the like.

More specifically, the common platform algorithm source code may be general DSP algorithm C source code, where the general DSP algorithm C source code is compatible with a syntax definition rule of matlab, and has the following features:

(1) A definition of an extended data type: capable of expressing an original data type (primitive) in the C language, for example, a fixed point, a floating point, a vector, a plural or the like, and an extended data type. The extended data type may include at least one of: a data type that is different from an original data type in the C language and a data type (custom data type) that is not defined in the C language.

For example, the extended data type may include a hash, a range, a matrix, or the like. The hash is a hash table in mathematics, the range is a range of data, and the hash, the range and the matrix are commonly used in a complex data operation.

For another example, the extended data type may include a custom data type, such as fix16.8, f16.6 or the like. fix16.8 and f16.6 are names of a custom data type. fix16.8 indicates a type of a fixed point, 16 is a total bit number, 8 is a bit that a decimal occupies, and f16.6 indicates a signed fixed-point number or floating-point number that includes a 6-bit decimal and a 10-bit integer.

(2) A definition of an extended operation: capable of expressing an original arithmetic operation in the C language, for example, a property, a bit operation, a value assignment operation, type conversion, arithmetical logic or the like, and an extended arithmetic operation (for example, a matrix arithmetic operation). Essentially, the extended operation may include at least one of: an operation that is different from the original operation in the C language and an operation that is not defined in the C language.

It should be noted that, operation = operator + operand. For example, in this operation c = a + b, = and + are operators, and a, b, and c are operands. Operands can also be subdivided into an input operand and an output operand. In this operation c = a + b, a and b are input operands and c is an output operand.

In the embodiment of the present invention, an operation definition refers to meaning (or meaning expressed by an operator) of an operation, for example, an operator "+" indicates addition, and an operator "-" indicates subtraction.

Actually, operations can be subdivided into various types, for example, an arithmetic operation (corresponding operational symbols are +, -, *, /, and the like), a relational operation (corresponding operational symbols are ==, !=, <, >, =<, >=, and the like), and a logical operation (corresponding operational symbols are ∥, &&, !, and the like).

(3) Demands for a data type and an operation that can adapt to a DSP platform, that is, a general-purpose language (which conforms to an expanded matlab rule) can be fully used to express the data type and the operation on the DSP platform. A reason why the matlab rule needs to be conformed to is that a basic data unit of matlab is a matrix; and instruction expression of the matlab is quite similar to a common form in mathematics and engineering. Using MATLAB to solve a problem is much simpler than using languages such as C and FORTRAN to solve the problem.

S2. Perform conversion on the general operator and the general data type in the common platform algorithm source code to obtain target platform algorithm source code that meets a target platform operation requirement and a data type requirement.

S3. Send the target platform algorithm source code to a target platform compiler, so that the target platform compiler performs compiling on the target platform algorithm source code to obtain an application that can run on a target platform.

It should be noted that, because the common platform algorithm source code only focuses on the arithmetic expression (which mainly expresses which operations are performed) of an algorithm, and does not involve content related to a platform, the common platform algorithm source code is unrelated to the platform, and therefore it is called the common platform algorithm source code.

For example, for this operation c = a + b, because of chip architectures of different platforms, different algorithm source code may be used to implement the foregoing operation.

For example, due to being limited by a chip architecture of a platform, the platform may use the following algorithm source code to implement c = a + b:

```
#include<iostream>
#include<>
using namespace std;
int main()
 {int a , b, c;
cout<<"Enter two numbers: "<<endl;
cin>>a>>b;
c=a+b;
cout<<"The sum of two numbers is: "<<c<<endl;
 }
```

No matter which algorithm source code is used, its essence still corresponds to this operation c = a + b, or is to implement this operation c = a + b. The common platform algorithm source code is like the foregoing c = a + b, and is unrelated to a chip architecture of a platform.

For another example, original platform algorithm source code may be regarded as a patent application written in Chinese, and common platform algorithm source code corresponding to the original platform algorithm source code may be regarded as a corresponding English version (English is an official language in many countries, which is only used as this analogy to describe a solution herein). If one wishes to apply for a patent in countries such as France and Italy, the English version of the foregoing patent application may be translated into a French version and an Italian version (which is equivalent to algorithm source code transplanted on a target platform).

It can be seen that, in this embodiment, common platform algorithm source code that uses a general operator and a general data type is used as intermediate code; the general operator and the general data type of the common platform algorithm source code are converted to obtain target platform algorithm source code that meets a target platform operation requirement and a data type requirement; and conversion of the general operator and the general data type is conversion of a basic operation. Therefore, in the embodiment of the present invention, cross-platform source-to-source conversion can be implemented, and a problem that cross-platform source-to-source conversion cannot be implemented in the prior art is solved. After the obtained target platform algorithm source code is sent to a target platform compiler, the target platform compiler can perform compiling on the target platform algorithm source code to finally obtain an application that can run on a target platform, thereby so as to transplant an application in an original platform to the target platform.

In addition, because the common platform algorithm source code is unrelated to a platform chip architecture, the common platform algorithm source code is used as intermediate code to generate algorithm source code that meets a requirement of each target platform. Compared with the prior art of implementing cross-platform transplantation, the present invention has greater advantages in terms of versatility and efficiency, which are reflected in:

That original platform algorithm source code corresponding to an application needs to be manually converted to common platform algorithm source code in a technical solution provided in the embodiment of the present invention is used as an example, compared with manual modification, research and development personnel do not need to be familiar with a platform instruction and a chip architecture of each target platform, and dependence on technologies of the research and development personnel is relatively low. Especially when there are multiple target platforms, in the technical solution provided in the embodiment, conversion (original platform algorithm source code is converted to common platform algorithm source code) needs to be performed for only once, but in the prior art, manual modification needs to be performed for each target platform. If that common platform algorithm source code is generated by automatic conversion or direct writing is used as an example, efficiency is higher compared with the manual modification.

In addition, in the solution, a target platform compiler does not need to be modified; and versatility of this solution is compared with the prior art in which a target platform compiler needs to be modified, upgrading efficiency of this solution is much higher.

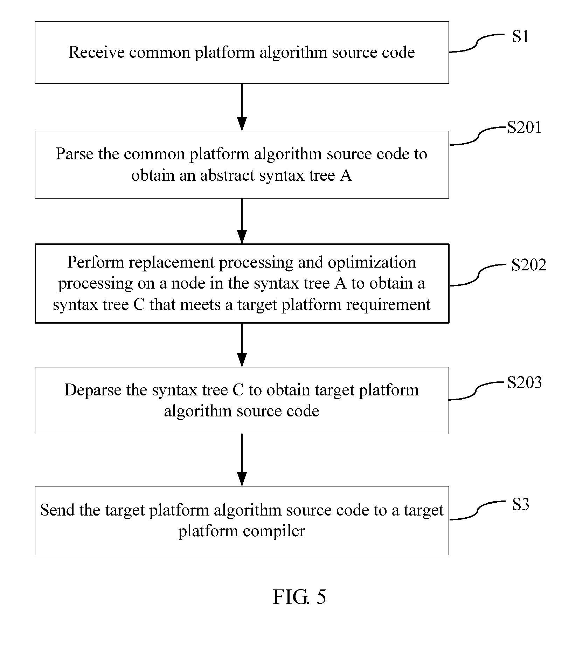

In another embodiment of the present invention, referring to FIG. 5, the foregoing step S2 may specifically include:

S201. Parse the common platform algorithm source code to obtain an abstract syntax tree (syntax tree A).

S202. Perform replacement processing and optimization processing on a general operation node in the syntax tree A to obtain a syntax tree C that meets a target platform operation requirement and a data type requirement.

S203. Deparse the syntax tree C to obtain the target platform algorithm source code.

It can also be understood as follows: it is assumed that for a certain application program, target platform algorithm source code Y already exists, and it is assumed that a syntax tree that is obtained after the target platform algorithm source code is parsed is the syntax tree C (the algorithm source code Y that meets a target platform operation requirement can be reversely restored by using the syntax tree C). In addition, it is assumed that a syntax tree that is obtained after common platform algorithm source code X corresponding to the application is parsed is the syntax tree A. One of key points of the embodiment of the present invention is that the syntax tree A is converted to the syntax tree C.

More specifically, a general operation node of the forgoing syntax tree A may include a general operator node and an operand node. Content of the general operator node includes a general operator, and content of the operand node includes a general data type corresponding to an operand.

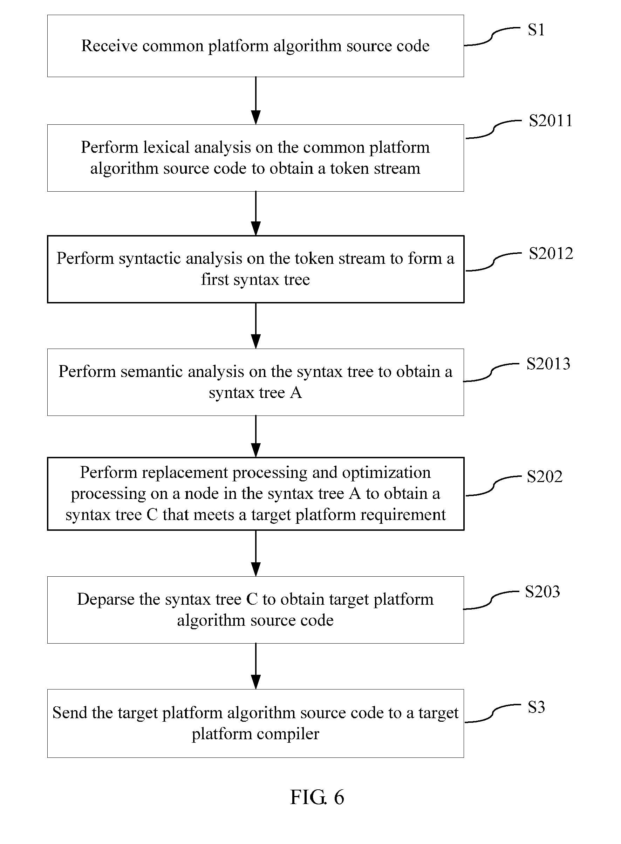

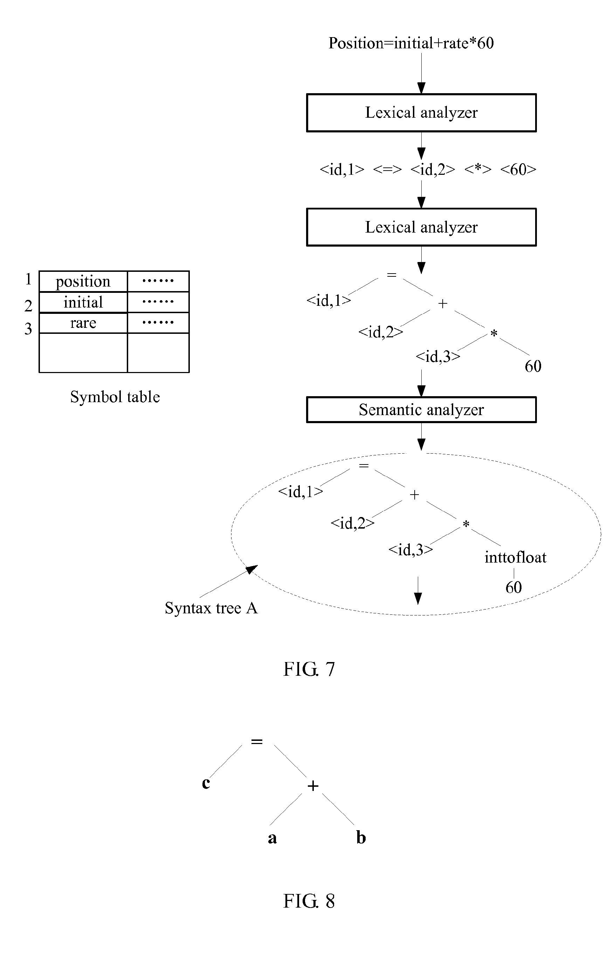

In another embodiment of the present invention, the source-to-source compiler in all the foregoing embodiments may include a lexical analyzer, a syntactic analyzer, and a semantic analyzer. Referring to FIG. 6 and FIG. 7, by using common platform algorithm source code: position = initial + rate * 60 as an example, step S201 may include the following sub-steps:

S2011. Perform lexical analysis on the common platform algorithm source code to obtain a token stream.

This step may be performed by the lexical analyzer. The lexical analyzer identifies each token (token) in the common platform algorithm source code according to a lexical rule, where each token represents a class of words (lexeme). The lexical analyzer inputs the common platform algorithm source code, and outputs the identified token stream. A task of the lexical analyzer is to convert a character stream in the common platform algorithm source code into a token stream.

S2012. Perform syntactic analysis on the token stream to form a first syntax tree.

This step may be performed by the syntactic analyzer. The syntactic analyzer identifies a structure (a phrase and a sentence) in the token stream according to a syntax rule, and constructs one syntax tree which can correctly reflect the structure. The syntax tree includes multiple nodes. A type of the node may be a general operator node (that is, =, +, and *), or an operand node (that is, 60).

S2013. Perform semantic analysis on the first syntax tree to obtain an abstract syntax tree (AST) that has undergone semantic analysis processing.

This step may be performed by the semantic analyzer. The semantic analyzer performs static semantic check on a syntax unit in the AST according to a semantic rule, which aims to ensure that a structure with correct syntax is semantically legal. In this embodiment, the abstract syntax tree A in the foregoing step S201 is specifically an abstract syntax tree that has undergone semantic analysis processing.

Lexical analysis, syntactic analysis and semantic analysis are the prior art, which are not repeatedly described in the present invention.

It should be noted that, in FIG. 7, an "inttofloat" node is a general operator node, which indicates an operation of conversion from an int data type to a float type, and 60 is an operand node. A reason why a data type of 60 needs to be converted from "int" to "float" is that a data type of another operand node is float; if the data type of the another operand node is also "int", there is no need to perform data type conversion; and a syntax tree does not need to include the general operator node "inttofloat".

In another embodiment of the present invention, the replacement processing in step S202 in all the foregoing embodiments may specifically include:

enabling each general operation node in the abstract syntax tree A to match a general operation library template, where when a preset matching condition is satisfied, the matching is successful; and
using content in a successfully matched general operation library template to replace content of a general operation node that matches the general operation library template, so as to obtain a second syntax tree.

More specifically, each general operation node in the abstract syntax tree A is enabled to match the general operation library template by traversing or in a certain sequence (such as depth-first). For a specific traversing manner and depth-first sequence, an existing manner may continue to be used, which is not repeatedly described herein.

The following describes a general operation library template.

The general operation library template may be configured by a user, and may be stored in a platform database. The general operation library template at least includes: a general operation template (such as a matrix multiplication template) and a general data type template.

Content of each general operation template includes operation code that corresponds to a general operation, and conforms to a definition of a target platform operation, or includes operation code that is applicable to a target platform and can implement the general operation. In order to improve transplantation universality, various types of operation code corresponding to a same general operation may be recorded in one general operation template, where each type of operation code corresponds to one target platform.

Content of each general data type template includes a definition or an explanation that corresponds to a general data type, and is of a data type that meets a data type requirement of a target platform. For example, a length (total bit number) of a data type and a bit that a decimal occupies are defined. Alternatively, content of each general data type template includes a definition or an explanation of a data type that is applicable to a target platform and corresponds to a general data type.

As mentioned above, operation = operator + operand, and therefore, a data type that is of an operand and used in the general operation template must have been defined in the general data type template. An identifier (data type name) of a data type in the data type template is referenced in the general operation template, and there is a detailed definition or explanation of the data type in the general data type template.

It should be noted that granularity of a node in the AST is related to the general operation template. For example, C = a * a + b * b, if there is a general operation corresponding to a * a + b * b in the general operation template, C = a * a + b * b may be parsed to three nodes: a "C" node, a "=" node and a (a * a + b * b) node. For this "=" general operator node, the "C" node is its left node, and the (a * a + b * b) node is its right node. And if there is no general operation corresponding to C = a * a + b * b in the general operation template, C = a * a + b * b may be parsed to five nodes: a "C" node, a "=" node, a (a * a) node, a "+" node, and a (b * b) node. The (a * a) node and the (b * b) node are operand nodes. In addition, this (a * a) operand node further includes three subnodes: a, *, and a; likewise, this (b * b) operand node further includes three subnodes: b, *, and b.

In another embodiment of the present invention, when a general operator node is enabled to match a general operation template, the preset matching condition may include that: an operation definition of the general operator node conforms to an operation definition of the general operation template (that is, a general operator included in the general operator node is consistent with a general operation that can be implemented by the general operation template), and a dependency relationship exists between a left node and a right node of the general operator node, that is, types of the left node and the right node are matched.

The general operator node "+" in FIG. 7 is used as an example. In a process of determining whether the general operator node matches a general operation template, when a dependency relationship is determined, whether an operation definition of "+" conforms to an operation definition of the general operation template needs to be determined, and whether data types of a left node <id, 2> and a right node (<id, 3> * inttofloat 60) of "+" match data types of operands in the general operation template, and whether the number of operands involved in "+" matches the number of the operands in the general operation template also need to be determined.

When an operand node is enabled to match a general data type template, the preset matching condition may include that: a general data type included in the operand node is consistent with a general data type corresponding to the general data type template, and a dependency relationship exists between a left node and a right node of the operator node. For the dependency relationship, reference may be made to the foregoing description.

More specifically, when content of the general operation node is replaced by using content in the general operation library template, if the general operation node is an operand node, a data type that is applicable to a target platform in a successfully matched general data type template is directly used to replace a general data type in the general operation node (if data types are the same, the data types may not be replaced but directly reserved).

If the general operation node is a general operator node, node information corresponding to the general operator node needs to be used as a parameter and is input to a successfully matched general operation template, and a return value (usually a character or a character string) of a successfully matched general operation template is used to replace the content in the general operation node.

The node information may at least include an operand involved in a general operation. The general operation template may be regarded as a function, where a parameter is input to the function, and a function including the parameter is obtained and is used as a return value.

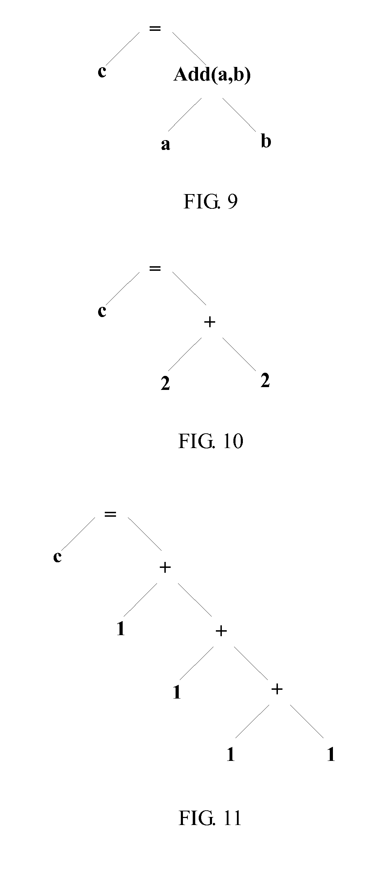

For example, a syntax tree A that corresponds to c = a + b is shown in FIG. 8. It is assumed that an operator corresponding to "+" in the target platform is "add", then operands a and b involved in "+" are used as parameters to be input to a matched general operation template (the template includes "add"), and then a return value is add (a, b). After add (a, b) is used to replace "+", a syntax tree, as shown in FIG. 9, is obtained.

In addition, it should be noted that, after a return value of the general operation template is used to replace the content of the general operator node, a case of a node increase may occur. For example, for a general operation c = 2 + 2, "1 + 1 + 1 + 1" may need to be used to implement "2 + 2" on a target platform. Therefore, a syntax tree A corresponding to c = 2 + 2 is shown in FIG. 10, and a syntax tree that is obtained after replacement by using a return value of a general operation template is shown in FIG. 11.

It should be noted that, because a return value (including an operator) of a general operation template is used to replace a general operator, a node in a second syntax tree includes an operator node and an operand node. Content of the operator node includes an operator, and content of the operand node includes a data type that corresponds to an operand and is applicable to the target platform.

It should be noted that, in a matching process, a general operation may be hierarchically expanded. For example, for a matrix multiplication general operation, it is assumed that a matrix A is $\begin{bmatrix} a1, a2, a3 \\ b1, b2, b3 \\ c1, c2, c3 \end{bmatrix}$ and a matrix

B is $\begin{bmatrix} d1 \\ d2 \\ d3 \end{bmatrix}$, the two are multiplied to obtain a matrix

C $\begin{bmatrix} a1*d1 + a2*d2 + a3*d3 \\ b1*d1 + b2*d2 + b3*d3 \\ c1*d1 + c2*d2 + c3*d3 \end{bmatrix}$.

It is assumed that there is a general operation template that can match a matrix multiplication general operation, and after a return value of the general operation template is used to replace node content, the matrix A and the matrix B may be multiplied and decomposed into three subnodes: $(a1*d1 + a2*d2 + a3*d3)$, $(b1*d1 + b2*d2 + b3*d3)$, and $(c1*d1 + c2*d2 + c3*d3)$, which is first-level expansion.

The foregoing three subnodes may continue to match the general operation template. The subnode $(a1*d1 + a2*d2 + a3*d3)$ is used as an example. It is assumed that there is another general operation template that can match a general operation characterized by the node $(a1*d1 + a2*d2 + a3*d3)$, and the subnode $(a1*d1 + a2*d2 + a3*d3)$, is decomposed into five subnodes: $(a1*d1)$, +, $(a2*d2)$, +, and $(a3*d3)$, which is second-level expansion.

The foregoing five subnodes may continue to match the general operation template. The subnode $(a1*d1)$ is used as an example. It is assumed that there is another general operation template that can match a general operation characterized by the subnode ($a1$ * $d1$), and the subnode ($a1$ * $d1$) is decomposed into three nodes: $a1$, *, and $d1$, which is third-level expansion. The rest can be deduced by analogy until no expansion can be performed.

That is, in this embodiment, after each-level expansion, each node in an expanded syntax tree can still be regarded as a general operation node, the node is enabled to match a general operator node template or a general data type node, and a successfully matched template is used to replace node content. For how to perform matching and replacement, reference may be made to the foregoing description.

In actual application, there may be some dedicated instructions (dedicated instructions) on a target platform, where the dedicated instructions at least include instructions that are customized by the target platform for a general operation.

Based on the dedicated instructions, in another embodiment of the present invention, a general operation library template may further include a dedicated instruction template. An instruction that is customized by the target platform for a general operation is recorded in the dedicated instruction template.

It should be noted that, one instruction usually includes both an operator and an operand. The operator indicates what type of operation this instruction should perform, and the operand is a participant to execute the instruction, that is, an object of various types of operations. If there is no such dedicated instruction, a general operation may need several common instructions to be performed, and with the dedicated instruction, the general operation may be completed by using this dedicated instruction, so as to improve performance.

Similar to matching of a general operation template, when a general operator node is enabled to match a dedicated instruction template, the preset matching condition may include that: an operation definition of the general operator node conforms to an operation definition of the dedicated instruction template (that is, a general operator included in the general operator node is consistent with a general operation that can be implemented by the dedicated instruction template), and a dependency relationship exists between a left node and a right node of the general operator node, that is, types of the left node and the right node are matched.

During replacement, node information corresponding to the general operator node is used as a parameter and is input to a successfully matched dedicated instruction template, and a return value (usually a character or a character string) of the successfully matched dedicated instruction template is used to replace content of the general operator node.

In another embodiment of the present invention, the dedicated instruction template and the general operation template in all the embodiments may be regarded as a same type of template. During matching, each general operation node is enabled to match each dedicated instruction template and general operation template.

For example, for a matrix multiplication general operation, it is assumed that a matrix A is $\begin{bmatrix} a1, a2, a3 \\ b1, b2, b3 \\ c1, c2, c3 \end{bmatrix}$

and a matrix B is $\begin{bmatrix} d1 \\ d2 \\ d3 \end{bmatrix}$, the two are multiplied to obtain

a matrix C $\begin{bmatrix} a1*d1 + a2*d2 + a3*d3 \\ b1*d1 + b2*d2 + b3*d3 \\ c1*d1 + c2*d2 + c3*d3 \end{bmatrix}$.

During matching, a matrix multiplication general operation is enabled to match a general operation template and a dedicated instruction template. It is assumed that the matrix multiplication general operation matches a dedicated instruction template, a dedicated instruction in the dedicated instruction template can implement matrix multiplication, node information is used as a parameter and is input to the successfully matched dedicated instruction template, and a return value of the template is used to replace content of the general operation node.

If there is no dedicated instruction template matching the matrix multiplication operation, but there is a general operation template matching the matrix multiplication operation, node information is used as a parameter and is input to the successfully matched general operation template, and a return value of the successfully matched general operation template is used to replace content of the general operation node.

It is assumed that, the successfully matched general operation template may make the matrices A and B be multiplied and decomposed into three operations (three subnodes): ($a1$ * $d1$ + $a2$ * $d2$ + $a3$ * $d3$), ($a1$ * $d1$ + $a2$ * $d2$ + $a3$ * $d3$), and ($c1$ * $d1$ + $c2$ * $d2$ + $c3$ * $d3$), which is first-level expansion.

The foregoing three subnodes may continue to match the general operation template and the dedicated instruction template. The subnode ($a1$ * $d1$ + $a2$ * $d2$ + $a3$ * $d3$) is used as an example. It is assumed that the subnode ($a1$ * $d1$ + $a2$ * $d2$ + $a3$ * $d3$) successfully matches another dedicated instruction template, node information is used as a parameter and is input to the successfully matched dedicated instruction template, and a return value of the successfully matched dedicated instruction template is used to replace content of the node.

And if there is no dedicated instruction template matching the subnode ($a1$ * $d1$ + $a2$ * $d2$ + $a3$ * $d3$), but there is another general operation template matching the subnode ($a1$ * $d1$ + $a2$ * $d2$ + $a3$ * $d3$), node information of the subnode ($a1$ * $d1$ + $a2$ * $d2$ + $a3$ * $d3$) is used as

a parameter and is input to the successfully matched general operation template, and a return value of the successfully matched general operation template is used to replace content of the node.

It is assumed that, the successfully matched general operation template may decompose the subnode ($a1 * d1 + a2 * d2 + a3 * d3$) into five subnodes: ($a1 * d1$), +, ($a2 * d2$), ($c1 * d1 + c2 * d2 + c3 * d3$), + ($a3 * d3$), which is second-level expansion.

The foregoing five subnodes may continue to match the general operation template and the dedicated instruction template. The subnode ($a1 * d1$) is used as an example. It is assumed that the subnode ($a1 * d1$) can match a dedicated instruction template, node information is used as a parameter and is input to the successfully matched dedicated instruction template, and a return value of the successfully matched dedicated instruction template is used to replace content of the node.

If there is no dedicated instruction template matching the subnode ($a1 * d1$), but there is another general operation template matching the subnode ($a1 * d1$), node information of the subnode ($a1 * d1$) is used as a parameter and is input to the successfully matched general operation template, and a return value of the successfully matched general operation template is used to replace content of the node.

It is assumed that, after the return value is replaced, the subnode ($a1 * d1$) is decomposed into three subnodes: $a1$, * and $d1$, and another level (third-level) expansion is performed. The rest can be deduced by analogy until no expansion can be performed.

Similar to the foregoing description, in this embodiment, after each-level expansion, each node in an expanded syntax tree can still be regarded as a general operation node, the node is enabled to match a general operator node template, a dedicated instruction template or a general data type node, and a successfully matched template is used to replace node content. For how to perform matching and replacement, reference may be made to the foregoing description.

The optimization processing mentioned in the foregoing description may be performed after a syntax tree is fully expanded (that is, after a second syntax tree is obtained), and may also be performed in a matching and expansion process of the syntax tree.

More specifically, the foregoing optimization processing may include: optimizing a second syntax tree to obtain a syntax tree C.

The foregoing optimization processing may specifically include merging nodes with a same cycle, eliminating redundant nodes, and vectorization, and the like. How to perform optimization processing is the prior art, which is not repeatedly described herein.

Syntax in the syntax tree C shows every detail of real syntax of a target platform. For example, in the syntax tree C, a matrix multiplication operation in a syntax tree A is expanded to form a cycle operation, and a general data type in the abstract syntax tree A is replaced with a data type of the target platform.

Alternatively, in another embodiment of the present invention, a dedicated instruction template and a general operation template may also be regarded as two types of templates. More specifically, the dedicated instruction template and the general operation template may be placed into two sets, for example, the general operation template is placed into a first set, and the dedicated instruction template is placed into a second set.

During matching, each general operation node in a syntax tree is enabled to match the general operation template in the first set, content in the successfully matched general operation template is used to replace node content, so as to obtain an intermediate syntax tree.

After each node has matched the general operation template, a node in the intermediate syntax tree is enabled to match the dedicated instruction template in the second set, and content in the successfully matched dedicated instruction template is used to replace node content.

The optimization processing mentioned in the foregoing description may be performed after a syntax tree is fully expanded, and may also be performed after the intermediate syntax tree is obtained. For related content of the optimization processing, reference may be made to the foregoing description, which is not repeatedly described herein.

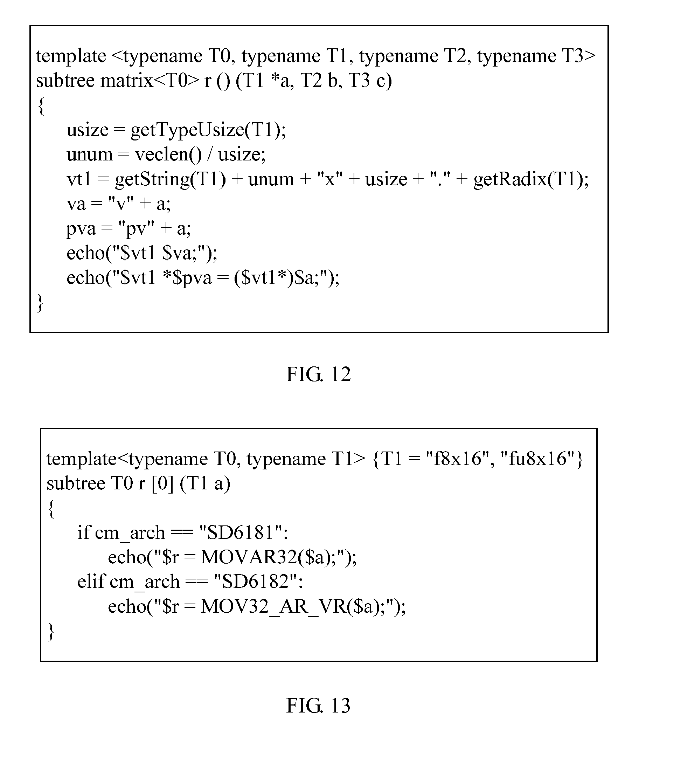

In addition, it should be noted that, a format of a template may conform to a template definition of C/C++ syntax. FIG. 12 shows a data type template of a matrix container, and FIG. 13 shows dedicated instruction templates of f8x16 and fu8x16.

Correspondingly, step S203 may specifically include that: with reference to information about a symbol table (the symbol table is a table on a left side of FIG. 7 in examples), a syntax tree C is deparsed according to a compiler principle to obtain target platform algorithm source code.

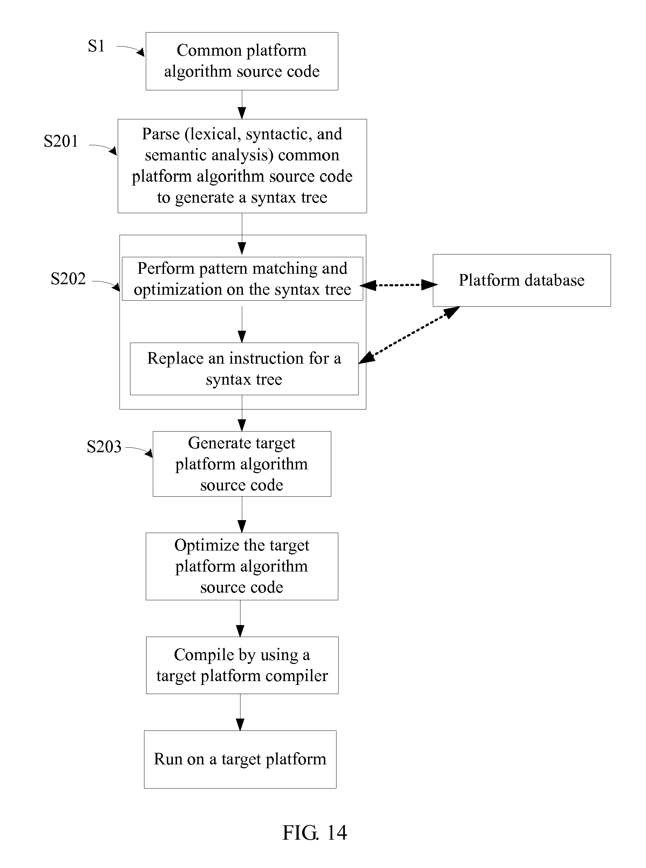

The target platform algorithm source code can be further re-optimized (automatic optimization or manual optimization), and finally undergoes compiling by using a compiler on a target platform, where the target platform algorithm source code is compiled into a binary file (that is, an application is formed) which can run on a corresponding target platform. FIG. 14 is a flowchart of a principle according to an embodiment of the present invention.

The following describes a typical application of technical solutions provided in the present invention.

It is assumed that, with the progress of chip technologies, a DSP platform A used by a current product needs to be to migrated to a platform B having better performance, and when an ISA or microarchitecture of the new platform B is updated, to make better use of performance of the new platform, product algorithm code needs to be transplanted.

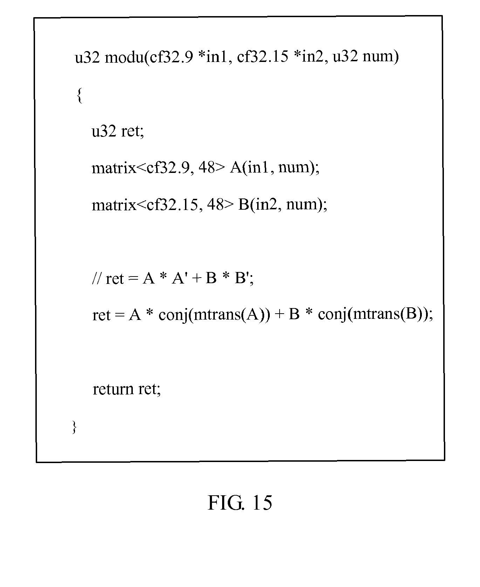

A vector modulo operation is used as an example, and for general DSP algorithm C source code corresponding to the vector modulo operation, reference may be made to FIG. 15.

The general DSP algorithm C source code needs to perform cross-platform use on the new platform B. A solving process of this embodiment is as follows:

Step 1): Check whether a dedicated instruction set and microarchitecture information of the new platform B, for example, an instruction pipeline definition (pipeline), exist on a platform database template; and if the dedicated instruction set and the microarchitecture information exist, proceed to step 2), and if the dedicated instruction set and the microarchitecture information do not exist, the dedicated instruction set and the microarchitecture information of the new platform need to be added to a platform database; and then proceed to step 2).

The microarchitecture information includes an instruction definition, an instruction format, an instruction pipeline, a launch number, a data type definition and the like.

Step 2): Compile general DSP algorithm code by using a source-to-source compiler tool to obtain algorithm source code related to the new platform.

A compiling process is that: a syntax tree A is obtained by parsing first, and then pattern matching is performed. For example, it is found that a vector modulo template can be matched; vector modulo operation code is used to perform replacement on the syntax tree A.

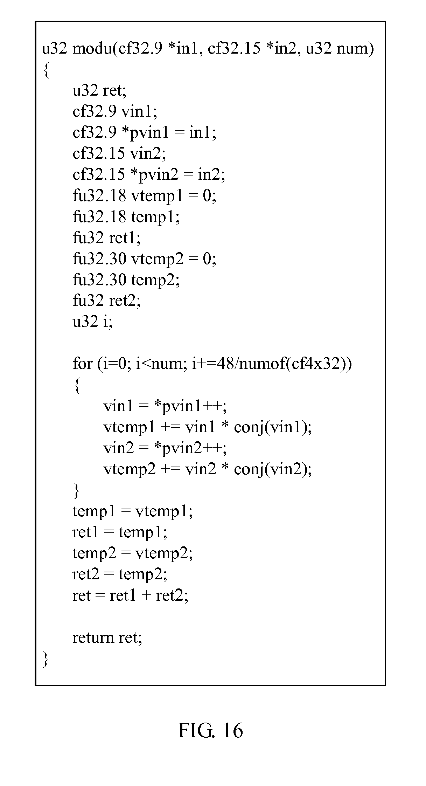

Step 3): Perform optimization, such as eliminating redundancy, expansion, and looping and merging, on the syntax tree obtained in step 2), so as to obtain a syntax tree B. Code corresponding to the syntax tree B is shown in FIG. 16.

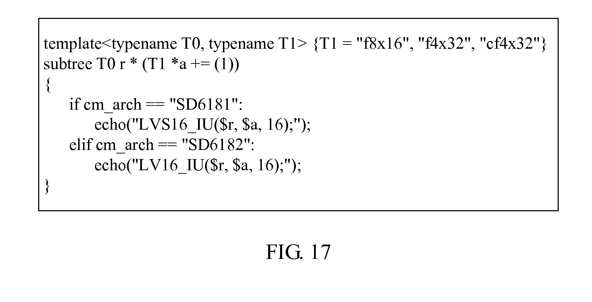

Step 4): Traverse the syntax tree B, match the syntax tree B with a dedicated instruction template, and perform replacement if the matching is successful, so as to obtain a syntax tree C. For example, a cf4x32 identifier in FIG. 16 may match a dedicated instruction template shown in FIG. 17.

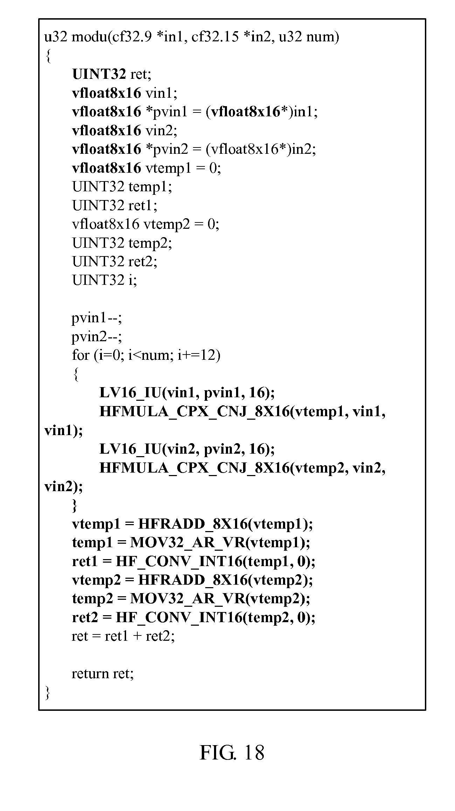

Step 5): Generate, according to the syntax tree C, algorithm source code (referring to FIG. 18) that can be transplanted to the platform B. A bold black part in FIG. 18 is a replacement part.

Step 6): After the algorithm source code related to the new platform is obtained, the algorithm source code can run on the new platform B after being compiled by a tool chain equipped with the platform; and the algorithm source code obtained in step (5) may further undergo adjustment and optimization.

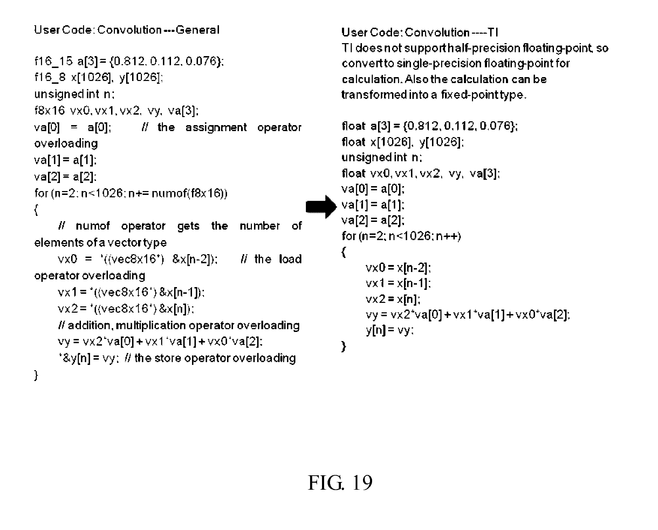

For more examples, reference may be made to FIG 19 to FIG. 20.

FIG. 19 shows that general convolution algorithm code is converted to algorithm code used in a TI platform. If "f16_15" in FIG. 19 is found to match a float type template of the TI platform when a data type of a node of a syntax tree is traversed, cross-platform adaption is performed, which is similar to others.

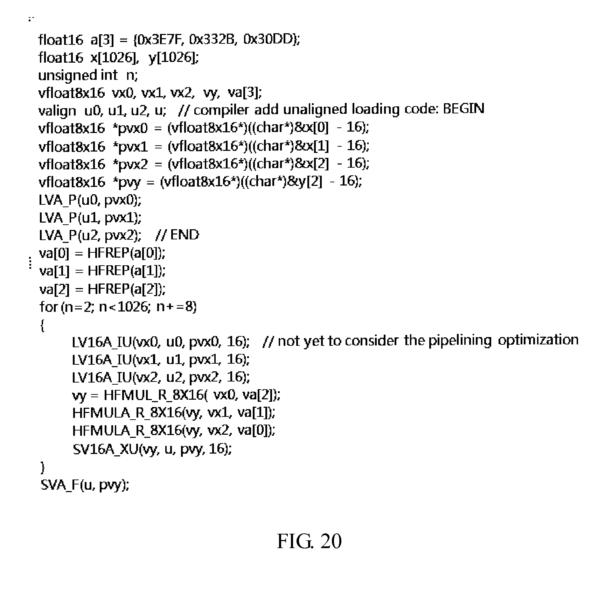

FIG. 20 shows algorithm source code that corresponds to general convolution algorithm code and is used in a Tensilica platform. If "f16_15" is found to match a float16 template type of the TI platform when a data type of a node of a syntax tree is traversed, cross-platform adaption and value conversion are performed, which is similar to others.

As can be seen from FIG. 19 to FIG. 20, after being compiled by a source-to-source compiler, the convolution general algorithm code has been modified or optimized in a data type, a value assignment operation, dedicated instruction replacement, or the like. The optimization is reflected in that: a most appropriate instruction (dedicated instruction) is used to implement an operation, and compared with a common instruction, performance is improved.

In addition, in another embodiment of the present invention, the foregoing template may be written in text formats, such as an XML and an INI.

For example:

```
< Template_matrix_times >
<Name> xxx </Name>
<TemplateType> (a,b,size) </TemplateType>
<param>a,matrix </ param >
<param>b,matrix </ param >
<param>size,matrix_size </ param >
<content>return a[size]*b[size] </contend>
<ReturnType> matrix </ ReturnType >
 ...
</Template_matrix_times>
```

It should be noted that, that algorithm source code that corresponds to the application and is applicable to an original platform is converted to common platform algorithm source code in an automatic manner is mentioned in the foregoing description. The automatic manner may be implemented as follows:

1) Parse the algorithm source code applicable to the original platform to obtain an abstract syntax tree D. For details, reference may be made to the foregoing steps S2011 to S2013, which are not repeatedly described herein. Nodes of the abstract syntax tree D may include an operator node and an operand node.
2) Enable each node in the abstract syntax tree D to match a template, use content in a successfully matched template to replace content of the node, so as to obtain the abstract syntax tree A.

The foregoing template may include an operator template and an operand template. Content of the operator template includes a general operator that corresponds to an operator of an original platform and conforms to a definition of a general operation. And content of each operand template includes a definition or an explanation of a general data type corresponding to a data type of an original platform.

In addition, the foregoing template may further include a general operation template. A general operation may include multiple operators and operands of the original platform. Alternatively, a combination of some nodes in the abstract syntax tree D may correspond to a general operation. Therefore, content in the general operation template may be used to replace a node combination.

Certainly, optimization may also be performed, and the like.

In summary, to solve a problem that it is difficult to implement code reuse because algorithm source code is strongly associated with a platform, in the present invention, a general algorithm programming manner is defined, then a source-to-source compiler is constructed to convert the algorithm source code to algorithm source code compatible with a new platform, so as to solve the problem that DSP algorithm code cannot be reused, improve the cross-platform development efficiency, and reduce the workload of code transplantation, thereby greatly reducing research and development costs.

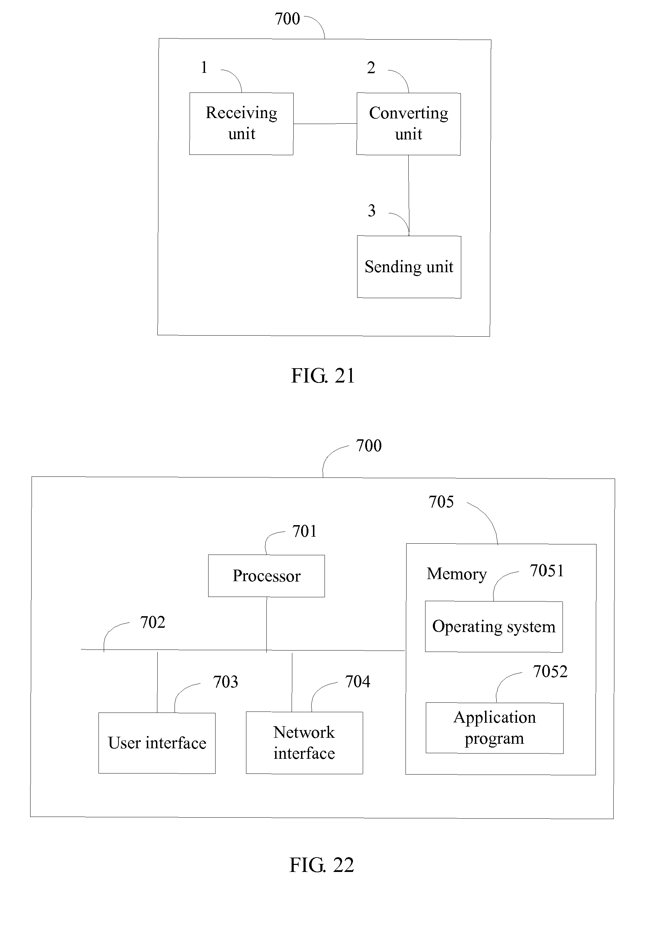

Corresponding to the foregoing method, the present invention is also required to protect a source-to-source compiler. Referring to FIG. 21, the source-to-source compiler 700 may include:

> a receiving unit 1, configured to receive common platform algorithm source code that is unrelated to a platform chip architecture, is written for an application program, and uses a general operator and a general data type;
> a converting unit 2, configured to perform conversion on the general operator and the general data type in the common platform algorithm source code to obtain target platform algorithm source code that meets a target platform operation requirement and a data type requirement; and
> a sending unit 3, configured to send the target platform algorithm source code to a target platform compiler, so that the target platform compiler performs compiling on the target platform algorithm source code to obtain an application that can run on a target platform.

For related content, reference may be made to descriptions of the method part of this specification, which is not repeatedly described herein.

FIG. 22 shows a hardware structure of the source-to-source compiler 700, which may include at least one processor 701, for example, a CPU, at least one network interface 704 or another user interface 703, a memory 705, and at least one communications bus 702. The communications bus 702 is configured to implement connection communication between these components. The transmission timing device 700 optionally includes the user interface 703, a keyboard or a clicking device, for example, a trackball (trackball), a touch plate or a touch display screen. The memory 705 may include a high-speed RAM memory, and may also include a non-volatile memory (non-volatile memory), for example, at least one disk memory. The memory 705 may optionally include at least one storing apparatus located far away from the processor 701.

In some implementation manners, the memory 705 stores the following elements: an executable module or a data structure, or subsets thereof, or extension sets thereof:

> an operating system 7051, including various system programs, and configured to implement various basic services and process a task based on hardware; and
> an application module 7052, including various application programs, and configured to implement various application services.

The application module 7052 includes but is not limited to an uplink determining module 1, a converting unit 2, and a sending unit 3.

For specific implementation of each module in the application module 7052, reference may be made to a corresponding module in an embodiment shown in FIG. 7, which is not repeatedly described herein.

In the embodiment of the present invention, by invoking a program or an instruction stored in the memory 705, the processor 701 is configured to:

> receive common platform algorithm source code that is unrelated to a platform chip architecture, is written for an application program, and uses a general operator and a general data type;
> perform conversion on the general operator and the general data type in the common platform algorithm source code to obtain target platform algorithm source code that meets a target platform operation requirement and a data type requirement; and
> send the target platform algorithm source code to a target platform compiler, so that the target platform compiler performs compiling on the target platform algorithm source code to obtain an application that can run on a target platform.

In addition, the processor 701 may also be configured to complete other steps that are introduced in a method part of the specification and in the transplantation method, and detailing of each step, which are not repeatedly described herein.

The embodiments in this specification are all described in a progressive manner, each embodiment focuses on differences from other embodiments, and reference may be made to each other for the same or similar part of the embodiments. For an apparatus provided in the embodiments, since the apparatus corresponds to the method provided in the embodiments, the apparatus is described briefly, and for the relevant part, reference may be made to the descriptions of the method part.

It should also be noted that in the specification, relational terms such as first and second are used only to differentiate an entity or operation from another entity or operation, and do not require or imply that any actual relationship or sequence exists between these entities or operations. Moreover, terms "include", "comprise", and any variation thereof are intended to cover a non-exclusive inclusion. Therefore, a process, method, object, or device that includes a series of elements not only includes such elements, but also includes other elements not specified expressly, or may include inherent elements of the process, method, object, or device. An element limited by "includes a..." does not, without more constraints, preclude the existence of additional identical elements in the process, method, article, or device that includes the element.

Through the foregoing description of the embodiments, it may be clearly understood by a person skilled in the art that the present invention may be implemented by software plus necessary universal hardware, where the universal hardware includes a universal integrated circuit, a universal CPU, a universal memory, a universal device, and the like, and certainly may also be implemented by application-specific hardware, like an application-specific integrated circuit, an application-specific CPU, an application-specific memory, an application-specific device, and the like, but in many cases, the former one is preferred. Based on such understandings, the essence of the technical solutions of the present invention or the part contributing to the prior art can be embodied in a software product. The computer software product may be stored in a readable storage medium such as various medium that can store software program code, including a USB flash disk, a removable storage medium, a read-only memory (ROM, Read-Only Memory), a random access memory (RAM, Random Access Memory), a magnetic disk, and an optical disc, where the storage medium incorporates several instructions causing a computer device (which may be a personal computer, a server, a network device, or the like) to perform the method specified in each embodiment of the present invention.

The foregoing descriptions of the provided embodiments enable a person skilled in the art to implement or use the present invention. Multiple modifications to these embodiments are apparent for a person skilled in the art. The general principle defined in the present invention may be implemented in other embodiments without departing from the spirit or scope of the present invention. Therefore, the present invention is not limited to the embodiments described in this specification, but extends to the widest scope that complies with the principle and novelty provided in the specification.

**Claims**

1. A cross-platform transplantation method for an application program, comprising:

   receiving common platform algorithm source code that is unrelated to a platform chip architecture, is written for an application program, and uses a general operator and a general data type;
   performing conversion on the general operator and the general data type in the common platform algorithm source code to obtain target platform algorithm source code that meets a target platform operation requirement and a data type requirement; and
   sending the target platform algorithm source code to a target platform compiler, so that the target platform compiler performs compiling on the target platform algorithm source code to obtain an application that can run on a target platform.

2. The method according to claim 1, wherein the performing conversion on the general operator and the general data type in the common platform algorithm source code to obtain target platform algorithm source code that meets a target platform operation requirement and a data type requirement specifically comprises:

   parsing the common platform algorithm source code to obtain an abstract syntax tree, wherein the abstract syntax tree comprises a general operation node;
   performing replacement processing and optimization processing on the general operation node in the abstract syntax tree to obtain a syntax tree that meets the target platform operation requirement and the data type requirement; and
   deparsing the syntax tree that meets the target platform operation requirement and the data type requirement, so as to obtain the target platform algorithm source code.

3. The method according to claim 2, wherein the parsing the common platform algorithm source code to obtain an abstract syntax tree comprises:

   performing lexical analysis on the common platform algorithm source code to obtain a token stream;
   performing syntactic analysis on the token stream to form a first syntax tree; and
   performing semantic analysis on the first syntax tree to obtain an abstract syntax tree that has undergone semantic analysis processing.

4. The method according to claim 2 or 3, wherein:

   the replacement processing comprises:

   enabling each general operation node in the abstract syntax tree to match a general operation library template, wherein when a preset matching condition is satisfied, the matching is successful; and

   using content in a successfully matched general operation library template to replace content of a general operation node that matches the general operation library template, so as to obtain a second syntax tree; and

   the optimization processing comprises: performing at least one of merging nodes with a same circle, eliminating redundant nodes, and vectorization on the second syntax tree, so as to obtain the syntax tree that meets the target platform operation requirement and the data type requirement.

5. The method according to any one of claims 2 to 4, wherein:

   the general operation node comprises a general operator node and an operand node;

   the general operation library template comprises a general operation template and a general data type template; and

   content of the general operation template comprises operation code that is applicable to the target platform and can implement a general operation; and content of the general data type template comprises a definition or an explanation of a data type that is applicable to the target platform and corresponds to a general data type.

6. The method according to claim 5, wherein:

   when the general operator node is enabled to match the general operation template, the preset matching condition comprises that: a general operator comprised in the general operator node is consistent with a general operation that is implemented by the general operation template, and a dependency relationship exists between associated nodes of the general operator node;

   when the operand node is enabled to match the general data type template, the preset matching condition comprises that: a general data type comprised in the operand node is consistent with a general data type corresponding to the general data type template, and a dependency relationship exists between associated nodes of the operand node; and

   the associated nodes comprise at least one of: a left node and a right node.

7. The method according to claim 5, wherein the general operation library template further comprises a dedicated instruction template, wherein content of the dedicated instruction template comprises an instruction that is applicable to the target platform and can implement a general operation;

   when the general operator node is enabled to match the dedicated instruction template, the preset matching condition comprises that: a general operator comprised in the general operator node is consistent with a general operation that is implemented by the dedicated instruction template, and a dependency relationship exists between associated nodes of the general operator node; and

   the associated nodes comprise at least one of: a left node and a right node.

8. The method according to any one of claims 1 to 7, wherein the received algorithm source code is specifically general DSP algorithm C source code.

9. A source-to-source compiler, comprising:

   a receiving unit, configured to receive common platform algorithm source code that is unrelated to a platform chip architecture, is written for an application program, and uses a general operator and a general data type;

   a converting unit, configured to perform conversion on the general operator and the general data type in the common platform algorithm source code to obtain target platform algorithm source code that meets a target platform operation requirement and a data type requirement; and

   a sending unit, configured to send the target platform algorithm source code to a target platform compiler, so that the target platform compiler performs compiling on the target platform algorithm source code to obtain an application that can run on a target platform.

10. The source-to-source compiler according to claim 9, wherein in an aspect of the performing conversion on the general operator and the general data type in the common platform algorithm source code to obtain target platform algorithm source code that meets a target platform operation requirement and a data type requirement, the converting unit is specifically configured to:

   parse the common platform algorithm source code to obtain an abstract syntax tree, wherein the abstract syntax tree comprises a general operation node;

   perform replacement processing and optimization processing on the general operation node in the abstract syntax tree to obtain a syntax tree that meets the target platform operation requirement and the data type requirement; and

deparse the syntax tree that meets the target platform operation requirement and the data type requirement, so as to obtain the target platform algorithm source code.

11. The source-to-source compiler according to claim 10, wherein in an aspect of the parsing the common platform algorithm source code to obtain an abstract syntax tree, the converting unit is specifically configured to:

perform lexical analysis on the common platform algorithm source code to obtain a token stream;

perform syntactic analysis on the token stream to form a first syntax tree; and

perform semantic analysis on the first syntax tree to obtain an abstract syntax tree that has undergone semantic analysis processing.

12. The source-to-source compiler according to claim 10 or 11, wherein in an aspect of the replacement processing, the converting unit is specifically configured to:

enable each general operation node in the abstract syntax tree to match a general operation library template, wherein when a preset matching condition is satisfied, the matching is successful; and

use content in a successfully matched general operation library template to replace content of a general operation node that matches the general operation library template, so as to obtain a second syntax tree; and

in an aspect of the optimization processing, the converting unit is specifically configured to: perform at least one of merging nodes with a same circle, eliminating redundant nodes, and vectorization on the second syntax tree, so as to obtain the syntax tree that meets the target platform operation requirement and the data type requirement.

13. The source-to-source compiler according to any one of claims 10 to 12, wherein:

the general operation node comprises a general operator node and an operand node;

the general operation library template comprises a general operation template and a general data type template; and

content of the general operation template comprises operation code that is applicable to the target platform and can implement a general operation; and content of the general data type template comprises a definition or an explanation of a data type that is applicable to the target platform and corresponds to a general data type.

14. The source-to-source compiler according to claim 13, wherein:

when the general operator node is enabled to match the general operation template, the preset matching condition comprises that: a general operator comprised in the general operator node is consistent with a general operation that is implemented by the general operation template, and a dependency relationship exists between associated nodes of the general operator node;

when the operand node is enabled to match the general data type template, the preset matching condition comprises that: a general data type comprised in the operand node is consistent with a general data type corresponding to the general data type template, and a dependency relationship exists between associated nodes of the operand node; and

the associated nodes comprise at least one of: a left node and a right node.

15. The source-to-source compiler according to claim 13, wherein:

the general operation library template further comprises a dedicated instruction template, wherein content of the dedicated instruction template comprises an instruction that is applicable to the target platform and can implement a general operation;

when the general operator node is enabled to match the dedicated instruction template, the preset matching condition comprises that: a general operator comprised in the general operator node is consistent with a general operation that is implemented by the dedicated instruction template, and a dependency relationship exists between associated nodes of the general operator node; and

the associated nodes comprise at least one of: a left node and a right node.

16. A source-to-source compiler, comprising a processor, a network interface or another user interface, a memory and a communications bus, wherein the communications bus is configured to implement connection communication between components, and by invoking a program or an instruction stored in the memory, the processor is configured to:

receive common platform algorithm source code that is unrelated to a platform chip architecture, is written for an application, and uses a general operator and a general data type;

perform conversion on the general operator and the general data type in the common platform algorithm source code to obtain target platform algorithm source code that meets a target platform operation requirement and a data type requirement; and

send the target platform algorithm source code to a target platform compiler, so that the target platform compiler performs compiling on the target platform algorithm source code to obtain an application that can run on a target platform.

17. The source-to-source compiler according to claim 16, wherein in an aspect of the performing conversion on the general operator and the general data type in the common platform algorithm source code to obtain target platform algorithm source code that meets a target platform operation requirement and a data type requirement, the processor is configured to:

parse the common platform algorithm source code to obtain an abstract syntax tree, wherein the abstract syntax tree comprises a general operation node;

perform replacement processing and optimization processing on the general operation node in the abstract syntax tree to obtain a syntax tree that meets the target platform operation requirement and the data type requirement; and

deparse the syntax tree that meets the target platform operation requirement and the data type requirement, so as to obtain the target platform algorithm source code.

18. The source-to-source compiler according to claim 17, wherein in an aspect of the parsing the common platform algorithm source code to obtain an abstract syntax tree, the processor is configured to:

perform lexical analysis on the common platform algorithm source code to obtain a token stream;

perform syntactic analysis on the token stream to form a first syntax tree; and

perform semantic analysis on the first syntax tree to obtain an abstract syntax tree that has undergone semantic analysis processing.

19. The source-to-source compiler according to claim 17 or 18, wherein in an aspect of the replacement processing, the processor is configured to:

enable each general operation node in the abstract syntax tree to match a general operation library template, wherein when a preset matching condition is satisfied, the matching is successful; and

use content in a successfully matched general operation library template to replace content of a general operation node that matches the general operation library template, so as to obtain a second syntax tree; and

the optimization processing comprises: performing at least one of merging nodes with a same circle, eliminating redundant nodes, and vectorization on the second syntax tree, so as to obtain the syntax tree that meets the target platform operation requirement and the data type requirement.

20. The source-to-source compiler according to any one of claims 17 to 19, wherein:

the general operation node comprises a general operator node and an operand node;

the general operation library template comprises a general operation template and a general data type template; and

content of the general operation template comprises operation code that is applicable to the target platform and can implement a general operation; and content of the general data type template comprises a definition or an explanation of a data type that is applicable to the target platform and corresponds to a general data type.

21. The source-to-source compiler according to claim 20, wherein:

when the general operator node is enabled to match the general operation template, the preset matching condition comprises that: a general operator comprised in the general operator node is consistent with a general operation that is implemented by the general operation template, and a dependency relationship exists between associated nodes of the general operator node;

when the operand node is enabled to match the general data type template, the preset matching condition comprises that: a general data type comprised in the operand node is consistent with a general data type corresponding to the general data type template, and a dependency relationship exists between associated nodes of the operand node; and

the associated nodes comprise at least one of: a left node and a right node.

22. The source-to-source compiler according to claim 20, wherein the general operation library template further comprises a dedicated instruction template, wherein content of the dedicated instruction template comprises an instruction that is applicable to the target platform and can implement a general operation;

when the general operator node is enabled to match the dedicated instruction template, the preset matching condition comprises that: a general operator comprised in the general operator node is consistent with a general operation that is implemented by the dedicated instruction template, and a dependency relationship exists between associated nodes of the general operator node;

the associated nodes comprise at least one of: a left node and a right node.

23. The apparatus according to any one of claims 16 to 22, wherein the received algorithm source code is specifically general DSP algorithm C source code.

FIG. 1

FIG. 2

100

105

101

Processor

Memory

1051

102

Application
program

103

104

User interface

Network
interface

FIG. 3

Receive common platform algorithm source code

S1

Perform conversion on a general operator and a general
data type in the common platform algorithm source code
to obtain target platform algorithm source code

S2

Send the target platform algorithm source code to a target
platform compiler

S3

FIG. 4

Receive common platform algorithm source code — S1

Parse the common platform algorithm source code to obtain an abstract syntax tree A — S201

Perform replacement processing and optimization processing on a node in the syntax tree A to obtain a syntax tree C that meets a target platform requirement — S202

Deparse the syntax tree C to obtain target platform algorithm source code — S203

Send the target platform algorithm source code to a target platform compiler — S3

FIG. 5

Receive common platform algorithm source code ⸺ S1

Perform lexical analysis on the common platform algorithm source code to obtain a token stream ⸺ S2011

Perform syntactic analysis on the token stream to form a first syntax tree ⸺ S2012

Perform semantic analysis on the syntax tree to obtain a syntax tree A ⸺ S2013

Perform replacement processing and optimization processing on a node in the syntax tree A to obtain a syntax tree C that meets a target platform requirement ⸺ S202

Deparse the syntax tree C to obtain target platform algorithm source code ⸺ S203

Send the target platform algorithm source code to a target platform compiler ⸺ S3

FIG. 6

Position=initial+rate*60

Lexical analyzer

<id,1> <=> <id,2> <*> <60>

Lexical analyzer

```
              =
<id,1>                +
          <id,2>            *
                  <id,3>        60
```

| 1 | position | ⋯⋯ |
|---|----------|------|
| 2 | initial | ⋯⋯ |
| 3 | rare | ⋯⋯ |
|  |  |  |

Symbol table

Semantic analyzer

```
              =
<id,1>                +
          <id,2>            *
                  <id,3>        inttofloat
                                    |
                                    60
```

Syntax tree A

FIG. 7

```
        =
c              +
           a        b
```

FIG. 8

FIG. 9

FIG. 10

FIG. 11

```
template <typename T0, typename T1, typename T2, typename T3>
subtree matrix<T0> r () (T1 *a, T2 b, T3 c)
{
    usize = getTypeUsize(T1);
    unum = veclen() / usize;
    vt1 = getString(T1) + unum + "x" + usize + "." + getRadix(T1);
    va = "v" + a;
    pva = "pv" + a;
    echo("$vt1 $va;");
    echo("$vt1 *$pva = ($vt1*)$a;");
}
```

FIG. 12

```
template<typename T0, typename T1> {T1 = "f8x16", "fu8x16"}
subtree T0 r [0] (T1 a)
{
    if cm_arch == "SD6181":
        echo("$r = MOVAR32($a);");
    elif cm_arch == "SD6182":
        echo("$r = MOV32_AR_VR($a);");
}
```

FIG. 13

S1 → Common platform algorithm source code

↓

S201 → Parse (lexical, syntactic, and semantic analysis) common platform algorithm source code to generate a syntax tree

↓

S202 → Perform pattern matching and optimization on the syntax tree ⇄ Platform database

↓

Replace an instruction for a syntax tree ⇠ Platform database

↓

S203 → Generate target platform algorithm source code

↓

Optimize the target platform algorithm source code

↓

Compile by using a target platform compiler

↓

Run on a target platform

FIG. 14

```
u32 modu(cf32.9 *in1, cf32.15 *in2, u32 num)

{

    u32 ret;

    matrix<cf32.9, 48> A(in1, num);

    matrix<cf32.15, 48> B(in2, num);


    // ret = A * A' + B * B';

    ret = A * conj(mtrans(A)) + B * conj(mtrans(B));


    return ret;

}
```

FIG. 15

```
u32 modu(cf32.9 *in1, cf32.15 *in2, u32 num)
{
    u32 ret;
    cf32.9 vin1;
    cf32.9 *pvin1 = in1;
    cf32.15 vin2;
    cf32.15 *pvin2 = in2;
    fu32.18 vtemp1 = 0;
    fu32.18 temp1;
    fu32 ret1;
    fu32.30 vtemp2 = 0;
    fu32.30 temp2;
    fu32 ret2;
    u32 i;

    for (i=0; i<num; i+=48/numof(cf4x32))
    {
        vin1 = *pvin1++;
        vtemp1 += vin1 * conj(vin1);
        vin2 = *pvin2++;
        vtemp2 += vin2 * conj(vin2);
    }
    temp1 = vtemp1;
    ret1 = temp1;
    temp2 = vtemp2;
    ret2 = temp2;
    ret = ret1 + ret2;

    return ret;
}
```

FIG. 16

```
template<typename T0, typename T1> {T1 = "f8x16", "f4x32", "cf4x32"}
subtree T0 r * (T1 *a += (1))
{
    if cm_arch == "SD6181":
        echo("LVS16_IU($r, $a, 16);");
    elif cm_arch == "SD6182":
        echo("LV16_IU($r, $a, 16);");
}
```

FIG. 17

```
u32 modu(cf32.9 *in1, cf32.15 *in2, u32 num)
{
    UINT32 ret;
    vfloat8x16 vin1;
    vfloat8x16 *pvin1 = (vfloat8x16*)in1;
    vfloat8x16 vin2;
    vfloat8x16 *pvin2 = (vfloat8x16*)in2;
    vfloat8x16 vtemp1 = 0;
    UINT32 temp1;
    UINT32 ret1;
    vfloat8x16 vtemp2 = 0;
    UINT32 temp2;
    UINT32 ret2;
    UINT32 i;

    pvin1--;
    pvin2--;
    for (i=0; i<num; i+=12)
    {
        LV16_IU(vin1, pvin1, 16);
        HFMULA_CPX_CNJ_8X16(vtemp1, vin1,
vin1);
        LV16_IU(vin2, pvin2, 16);
        HFMULA_CPX_CNJ_8X16(vtemp2, vin2,
vin2);
    }
    vtemp1 = HFRADD_8X16(vtemp1);
    temp1 = MOV32_AR_VR(vtemp1);
    ret1 = HF_CONV_INT16(temp1, 0);
    vtemp2 = HFRADD_8X16(vtemp2);
    temp2 = MOV32_AR_VR(vtemp2);
    ret2 = HF_CONV_INT16(temp2, 0);
    ret = ret1 + ret2;

    return ret;
}
```

FIG. 18

User Code: Convolution ---General

```
f16_15 a[3] = {0.812, 0.112, 0.076};
f16_8 x[1026], y[1026];
unsigned int n;
f8x16 vx0, vx1, vx2, vy, va[3];
va[0]  =  a[0];         // the assignment operator
overloading
va[1] = a[1];
va[2] = a[2];
for (n=2; n<1026; n+= numof(f8x16))
{
        // numof operator gets the number of
elements of a vector type
        vx0  =  *((vec8x16*) &x[n-2]);       // the load
operator overloading
        vx1 = *((vec8x16*) &x[n-1]);
        vx2 = *((vec8x16*) &x[n]);
        // addition, multiplication operator overloading
        vy = vx2*va[0] + vx1*va[1] + vx0*va[2];
        *&y[n] = vy; // the store operator overloading
}
```

User Code: Convolution ----TI
TI does not support half-precision floating-point, so
convert to single-precision floating-point for
calculation. Also the calculation can be
transformed into a fixed-point type.

```
float a[3] = {0.812, 0.112, 0.076};
float x[1026], y[1026];
unsigned int n;
float vx0, vx1, vx2, vy, va[3];
va[0] = a[0];
va[1] = a[1];
va[2] = a[2];
for (n=2; n<1026; n++)
{
        vx0 = x[n-2];
        vx1 = x[n-1];
        vx2 = x[n];
        vy = vx2*va[0] + vx1*va[1] + vx0*va[2];
        y[n] = vy;
}
```

FIG. 19

```
float16 a[3] = {0x3E7F, 0x332B, 0x30DD};
float16 x[1026], y[1026];
unsigned int n;
vfloat8x16 vx0, vx1, vx2, vy, va[3];
valign u0, u1, u2, u;   // compiler add unaligned loading code: BEGIN
vfloat8x16 *pvx0 = (vfloat8x16*)((char*)&x[0]  - 16);
vfloat8x16 *pvx1 = (vfloat8x16*)((char*)&x[1]  - 16);
vfloat8x16 *pvx2 = (vfloat8x16*)((char*)&x[2]  - 16);
vfloat8x16 *pvy = (vfloat8x16*)((char*)&y[2]  - 16);
LVA_P(u0, pvx0);
LVA_P(u1, pvx1);
LVA_P(u2, pvx2);   // END
va[0] = HFREP(a[0]);
va[1] = HFREP(a[1]);
va[2] = HFREP(a[2]);
for (n=2; n<1026; n+=8)
{
     LV16A_IU(vx0, u0, pvx0, 16);   // not yet to consider the pipelining optimization
     LV16A_IU(vx1, u1, pvx1, 16);
     LV16A_IU(vx2, u2, pvx2, 16);
     vy = HFMUL_R_8X16( vx0, va[2]);
     HFMULA_R_8X16(vy, vx1, va[1]);
     HFMULA_R_8X16(vy, vx2, va[0]);
     SV16A_XU(vy, u, pvy, 16);
}
SVA_F(u, pvy);
```

FIG. 20

700

1

Receiving unit

2

Converting unit

3

Sending unit

FIG. 21

700

705

701

Processor

Memory

7051

Operating system

702

7052

703

704

User interface

Network interface

Application program

FIG. 22

# INTERNATIONAL SEARCH REPORT

| | International application No. |
|---|---|
| | **PCT/CN2014/076174** |

**A. CLASSIFICATION OF SUBJECT MATTER**

G06F 9/44 (2006.01) i

According to International Patent Classification (IPC) or to both national classification and IPC

**B. FIELDS SEARCHED**

Minimum documentation searched (classification system followed by classification symbols)

G06F 9/

Documentation searched other than minimum documentation to the extent that such documents are included in the fields searched

Electronic data base consulted during the international search (name of data base and, where practicable, search terms used)

CNABS, DWPI, CNKI: node, transplant, migrate, programme, point, syntax w tree, source w code

**C. DOCUMENTS CONSIDERED TO BE RELEVANT**

| Category* | Citation of document, with indication, where appropriate, of the relevant passages | Relevant to claim No. |
|---|---|---|
| X | CN 101986266 A (ZHEJIANG UNIVERSITY), 16 March 2011 (16.03.2011), claim 1, and description, paragraphs [0019]-[0051] | 1, 8, 9, 16, 23 |
| Y | CN 101986266 A (ZHEJIANG UNIVERSITY), 16 March 2011 (16.03.2011), claim 1, and description, paragraphs [0019]-[0051] | 2, 3, 10, 11, 17, 18 |
| Y | CN 103294598 A (HUAWEI TECHNOLOGIES CO., LTD.), 11 September 2013 (11.09.2013), claim 1 | 2, 3, 10, 11, 17, 18 |
| A | CN 102364433 A (INSIGMA TECHNOLOGY CO., LTD.), 29 February 2012 (29.02.2012), the whole document | 1-23 |
| PX | CN 103631632 A (HUAWEI TECHNOLOGIES CO., LTD.), 12 March 2014 (12.03.2014), the whole document | 1-23 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 August 2014 (06.08.2014) | **29 August 2014 (29.08.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Yan** Telephone No.: (86-10) 62089117 |
|---|---|

Form PCT/ISA/210 (second sheet) (July 2009)

35

## INTERNATIONAL SEARCH REPORT
### Information on patent family members

International application No.

**PCT/CN2014/076174**

| Patent Documents referred in the Report | Publication Date | Patent Family | Publication Date |
|---|---|---|---|
| CN 101986266 A | 16 March 2011 | CN 101986266 B | 29 May 2013 |
| CN 103294598 A | 11 September 2013 | None | |
| CN 102364433 A | 29 February 2012 | CN 102364433 B | 01 January 2014 |
| CN 103631632 A | 12 March 2014 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310632199